# EUROPÄISCHE PATENTANMELDUNG

(11) **EP 2 017 932 A1**
(43) Veröffentlichungstag der Anmeldung: **21.01.2009**
(21) Anmeldenummer: 07112860.7
(22) Anmeldetag: 20.07.2007
(51) Int. Cl.: H02B 13/045

(54) **Modulgehäuse**

(71) Anmelder: ABB Research Ltd., 8050 Zürich (CH)
(72) Erfinder: Meier, Guido, CH-5303, Würenlingen (CH); Lakner, Martin, CH-5412, Gebenstorf (CH); Ritzer, Leopold, CH-5417, Untersiggenthal (CH)
(74) Vertreter: ABB Patent Attorneys

(57) **Zusammenfassung**

Das Modulgehäuse (10) ist für ein mit Isoliergas unter Druck gefülltes Modul einer gasisolierten gekapselten Schaltanlage bestimmt. Es enthält ein als Aluminiumgussteil (20) ausgeführtes Metallgehäuse, das beim Betreiben der Schaltanlage dem Druck des Isoliergases ausgesetzt ist. Auf einem ausbeulungs- oder rissgefährdeten Abschnitt des Aluminiumgussteils (20) ist eine Umhüllung (30) aus einem faserverstärkten Kunststoff aufgebracht, deren Fasern (31) mit Vorspannung um den Abschnitt geführt sind.

Ein solches Modulgehäuse (10) ist bei einem vorgegebenen Betriebsdruck des Isoliergases in einem Modul einer gekapselten gasisolierten Anlage verwendbar, welche mit einem höheren Nennstrom belastbar ist als eine Schaltanlage mit einem vergleichbar dimensionierten Modul, welches aber ein Gehäuse nach dem Stand der Technik aufweist.

## Beschreibung

### TECHNISCHES GEBIET

Die vorliegende Erfindung bezieht sich auf Gehäuse für ein mit Isoliergas unter Druck gefülltes Modul einer gekapselten gasisolierten Schaltanlage nach dem Oberbegriff von Patentanspruch 1. Ein solches Modulgehäuse enthält ein als Aluminiumgussteil ausgeführtes Metallgehäuse, das beim Betreiben der Schaltanlage dem Druck des Isoliergases ausgesetzt ist.

Im Unterschied zur konventionellen luftisolierten Schaltanlage ist in einer gekapselten gasisolierten Schaltanlage ein mit Hochspannung belastbares Aktivteil vollständig in einer Kapselung angeordnet, die mit einem - unter Druck stehenden - Isoliergas, insbesondere SF₆, gefüllt ist. Eine gekapselte gasisolierte Schaltanlage ist im allgemeinen modular aufgebaut und enthält dann als Module ausgebildete Anlagenkomponenten. Jedes Modul weist einen Abschnitt des Aktivteils auf, beispielsweise eine Kontaktanordnung eines Schalters, typischerweise eines Leistungs-, eines Trenn- oder eines Erdungsschalters oder einen Stromleiter, beispielsweise eine Stromverbindung, einen Abgang oder eine Sammelschiene.

### STAND DER TECHNIK

Ein Modulgehäuse der eingangs genannten Art ist beschrieben in der von ABB Switzerland Ltd herausgegebenen Firmenschrift GIS ELK-3 Gas-insulated switchgear for maximum performance, 420 kV. Da in einer gekapselten gasisolierten Schaltanlage unterschiedlich ausgebildete Module, wie Leistungsschalter-, Trennschalter-, Sammelschienen-, Messwandler- oder Überspannungsableitermodule benötigt werden, und da die Grösse der Module auch von der Spannung abhängt, mit der die Schaltanlage betrieben wird, benötigt der Hersteller solcher Schaltanlagen Modulgehäuse mit unterschiedlichem Design und mit unterschiedlichen Grössen in beträchtlichen Stückzahlen. Aus fertigungstechnischen und wirtschaftlichen Gründen ist daher das Modulgehäuse als Aluminiumgussteil gefertigt.

In CH 628 468 A5 ist eine gekapselte gasisolierte Hochspannungsleitung beschrieben, in der ein Abschnitt eines Hochspannung führenden Stromleiters gegenüber einer geerdeten Metallkapselung auf einem Stützisolator elektrisch isoliert abgestützt ist. Die Metallkapselung ist aus zylindrischen Rohren zusammengesetzt, die durch Flansche gasdicht miteinander verbunden sind. Die Wandstärken der Metallrohre sind entsprechend dem vorgesehenen Betriebs-Gasdruck ausgelegt und bestehen aus einem spiralgeschweissten Aluminiumband. Auf lichtbogengefährdeten Bereichen des Metallrohrs ist eine hitze- und druckbeständige Isolationsschicht aus einem faserverstärkten Kunststoff, typischerweise auf der Basis Epoxidharz und Glasfasergewebe, resp. Glasfaserroving, durch eine kombinierte Flächenwickeltechnik unter Anwendung einer Zugvorspannung aufgebracht. Schmilzt wegen eines auf der Metallkapselung fussenden Störlichtbogens die Metallkapselung durch, so verhindert die Isolationsschicht das Austreten von Gas aus dem Modul.

### DARSTELLUNG DER ERFINDUNG

Der Erfindung, wie sie in den Patentansprüchen angegeben ist, liegt die Aufgabe zugrunde, ein Modulgehäuse der eingangs genannten Art anzugeben, dass bei einem vorgegebenen Betriebsdruck des Isoliergases in einem Modul einer gekapselten gasisolierten Anlage verwendbar ist, die mit einem höheren Nennstrom belastbar ist als eine Schaltanlage mit einem vergleichbar dimensionierten Modul, welches aber ein Gehäuse nach dem Stand der Technik aufweist.

Beim Modulgehäuse nach der Erfindung ist auf einem ausbeulungs- oder rissgefährdeten Abschnitt eines als Aluminiumgussteil ausgeführten Metallgehäuses eine Umhüllung aus einem faserverstärkten Kunststoff aufgebracht, deren Fasern mit Vorspannung um den Abschnitt geführt sind. Gegenüber einem umhüllungsfreien und als Aluminiumgussteil ausgeführten Modulgehäuse nach dem Stand der Technik weist ein solches Modulgehäuse bei hohen Temperaturen eine erheblich verbesserte Druckfestigkeit auf, da nun ausbeulungs- und rissgefährdete Abschnitte des Aluminiumgussgehäuses durch die zusätzliche Umhüllung abgestützt sind und so bei erhöhter Gehäusetemperatur ein Festigkeitsabfall des Aluminiumgussteils durch die Umhüllung kompensiert wird. Da beim Betrieb der gekapselten gasisolierten Schaltanlage mit einem hohen Nennstrom das Modulgehäuse infolge von Stromverlusten und elektromagnetischen Feldern stark erwärmt wird, wirkt sich die durch diese Erwärmung hervorgerufene Festigkeitsreduktion des Aluminiumgussteils nicht auf die Berstfestigkeit des Modulgehäuses aus. Das Modulgehäuse kann daher auch bei hohen Gehäusetemperaturen mit einem Betriebsdruck belastet werden, der bei dem als Aluminiumgussteil ausgeführten Modulgehäuse nach dem Stand der Technik nicht mehr zulässig ist.

Sind die Fasern der Umhüllung in Form eines Bands um den ausbeulungs- oder rissgefährdeten Abschnitt des Aluminiumgussteils gewickelt, so kann das Modulgehäuse nach der Erfindung in wirtschaftlicher Weise gefertigt werden und kann dessen Berstfestigkeit durch geeignete, auf das Gehäusedesign abgestimmte Orientierung des Bandes während des Wickelvorgangs optimiert werden.

Mit Vorteil enthält das Aluminiumgussteil ein Kühlelement. Dieses Kühlelement entzieht dem Modulgehäuse Wärme, die beim Betreiben der Schaltanlage durch den Betriebsstrom im Modul gebildet wird, und führt sie nach aussen ab. Eine unzulässig hohe Erwärmung des Modulgehäuses auch beim Führen eines hohen Nennstroms wird so vermieden. In besonders einfacher und kostengünstiger Weise wird diese vorteilhafte Wirkung durch ein Kühlelement erreicht, welches von einem freiliegenden Abschnitt des Aluminiumgussteils gebildet ist. Zur Erreichung einer besonders hohen Kühlwirkung können Kühlrippen an den freiliegenden Abschnitt angeformt sein.

Alternativ oder aber auch zusätzlich kann das Aluminiumgussteil ein Verbindungsstück einer thermisch leitenden Verbindung zu einem zusätzlichen Kühlelement enthalten. Das Modulgehäuse kann dann besonders wirksam gekühlt werden. Aus fertigungstechnischen Gründen ist ein solches Verbindungsstück mit Vorteil als Verbindungsflansch des Aluminiumgussteils ausgebildet. Es kann so in kostengünstiger Weise besonders wirksam gekühlt werden. Als zusätzliches Kühlelement können beispielsweise in gasisolierten Schaltanlagen vorgesehene Dehnungskompensatoren mit Faltenbalgstruktur verwendet werden, welche wegen ihrer Rippenstruktur einen besonders hohen Wirkungsgrad als Kühlelement aufweisen.

In einer bevorzugten Ausführungsform des Modulgehäuses nach der Erfindung ist das Aluminiumgussteil als Rohrverzweigung ausgebildet und weist ein Rohr sowie mindestens einen am Rohr angesetzten Rohrstutzen auf, und ist der faserverstärkte Kunststoff am Ansatz des Rohrstutzens an das Rohr auf das Aluminiumgussteil aufgebracht. Nach Einbau des mit einem solchen Modulgehäuse ausgerüsteten Moduls in die Schaltanlage können dann am Rohrstutzen eingeleitete mechanische Kräften abgeschwächt und Rissbildung am Ansatz des Rohrstutzens am Rohr weitgehend vermieden werden.

Hierbei wird eine hohe Stützkraft der Umhüllung erreicht, wenn die Fasern der Umhüllung von einem ersten Abschnitt des Rohrs über eine von einem zweiten Abschnitt des Rohrs und dem Rohrstutzen gebildete erste Krümmung der Rohrverzweigung, den Rohrstutzen und eine vom ersten Rohrabschnitt und dem Rohrstutzen gebildete zweite Krümmung der Rohrverzweigung zum zweiten Rohrabschnitt geführt sind. Diese hohe Stützkraft wird erreicht, wenn die Rohrverzweigung als T-Stück ausgebildet ist, wird aber auch erreicht, wenn die Rohrverzweigung als Kreuzstück ausgebildet ist, der Rohrstutzen also ein Abschnitt eines von zwei sich kreuzenden Rohren der Rohrverzweigung ist.

### KURZE BESCHREIBUNG DER ZEICHNUNGEN

Anhand von Zeichnungen wird nachfolgend ein Ausführungsbeispiel der Erfindung näher erläutert. Hierbei zeigt
- Fig.1: eine Seitenansicht einer gekapselten gasisolierten Schaltanlage in Modulbauweise,
- Fig.2: eine Seitenansicht einer als T-förmige Rohrverzweigung ausgebildeten Ausführungsform eines Modulgehäuses nach der Erfindung, welches in einem in der Schaltanlage nach Fig.1 angeordneten Modul CE₁ vorgesehen und lediglich oberhalb einer Achse A vollständig dargestellt ist, und
- Fig.3: ein Diagramm, in dem die 0,2%-Zeitdehngrenze von Werkstoffen in Funktion der Temperatur dargestellt ist, welche Werkstoffe im Modulgehäuse gemäss Fig.2 eingesetzt sind.

### WEGE ZUR AUSFÜHRUNG DER ERFINDUNG

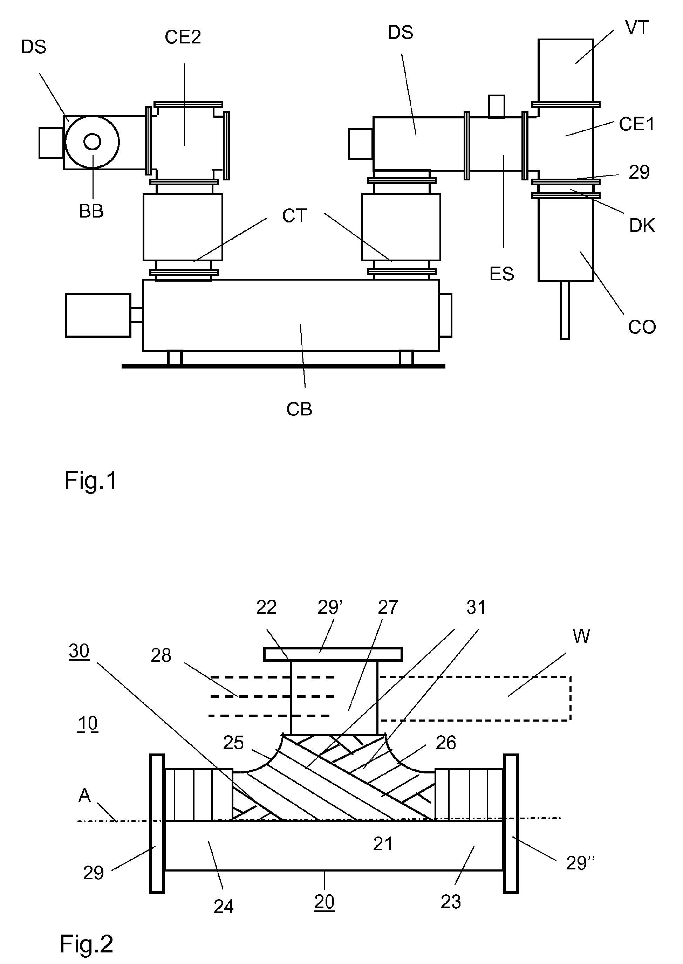

In allen Figuren beziehen sich gleiche Bezugszeichen auf gleichwirkende Teile. Die in Fig.1 dargestellte gekapselte gasisolierte Schaltanlage ist modular aufgebaut und enthält Module CB, DS, ES, BB, CT, VT , CO, CE₁ und CE₂, welche der Reihe jeweils als Leistungsschalter, Trennschalter, Schnellerder, Sammelschiene, Stromwandler, Spannungswandler, Kabelabgang und Stromverbinder ausgeführt sind. Diese Module enthalten jeweils ein Modulgehäuse mit Verbindungsflanschen. An den Verbindungsflanschen sind die einzelnen Module zu einer auf einem definierten Potential gehaltenen Kapselung zusammengesetzt, welche mit Isoliergas unter Druck gefüllt ist und auf Hochspannung befindliche Aktivteile (in Fig.1 nur beim Sammelschienen-Modul BB zu erkennen) aufnimmt. Die Aktivteile sind auf Stützisolatoren gehalten, die an den Verbindungsflanschen abgestützt sind. Im allgemeinen sind die Stützisolatoren jeweils als Schottungsisolator ausgebildet und kann das Modul vor dem Einbau in die Schaltanlage als selbstständige Einheit mit dem Isoliergas unter Druck gefüllt sein. Typische Kennwerte einer solchen Schaltanlage sind beispielsweise eine Nennspannung von 420 kV, ein Nennstrom von 63 kA und ein Gasdruck des Isoliergases von 8 bar, wobei als Isoliergas typischerweise eines der Gase SF₆, N₂ und CO₂ allein oder in Mischung verwendet wird.

Der typische Aufbau eines mit dem Bezugszeichen 10 gekennzeichneten Modulgehäuses ist in Fig. 2 beim Verbindungsmodul CE₁ gezeigt. Ersichtlich ist das Gehäuse 10 als T-förmige Rohrverzweigung ausgebildet. Die Rohrverzweigung ist hauptsächlich von einem als Aluminiumgussteil 20 ausgeführten Metallgehäuse gebildet und besteht aus einer festen und zähen Legierung, typischerweise auf der Basis AlCu4Ti. Sie weist ein längs einer Achse A erstrecktes Rohr 21 sowie einen am Rohr senkrecht angesetzten Rohrstutzen 22 auf. Das Modulgehäuse 10 resp. die als T-Stück ausgeführte Rohrverzweigung weist auch eine Umhüllung 30 aus einem faserverstärkten Kunststoff auf, deren Fasern 31 mit Vorspannung auf das Aluminiumgussteil 20 aufgebracht sind. Die Umhüllung 30 ist lediglich oberhalb der Achse A dargestellt. Der unterhalb der Achse auf dem Rohr 21 aufgebrachte Teil der Umhüllung wurde weggelassen, so dass der sonst von der Umhüllung 30 abgedeckte Teil des Rohrs 21 resp. des Aluminiumgusskörpers 20 sichtbar ist.

Der faserverstärkte Kunststoff enthält ein Polymer auf der Basis eines duromeren Harzes, wie insbesondere eines Epoxids, und darin eingebettete Fasern, wie insbesondere Glas-, Kohlenstoff- oder auch temperaturbeständige Kunststofffasern, etwa auf der Basis Aramid. Im allgemeinen werden die Fasern durch Wickeln auf das Aluminiumgussteil 20 aufgebracht und wird die Umhüllung 30 schliesslich durch Tränken der auf dem Gussteil 20 aufgebrachten Fasern 31 mit dem flüssigen Duromer und Aushärten des Duromers bei erhöhter Temperatur gebildet. Die Umhüllung 10 wird vor allem auf einem ausbeulungs- oder rissgefährdeten Abschnitt des Aluminiumgussteils 20 aufgebracht. Ein solcher Abschnitt wird beim T-Stück nach Fig.2 vom Ansatz des Rohrstutzens 22 am Rohr 21 gebildet.

Durch die Umhüllung 30 wird die 0,2%-Zeitdehngrenze des Modulgehäuses 10 erhöht. Dies wirkt sich vor allem bei Temperaturen grösser 100°C aus, da sich zwischen 100°C und 150°C die 0,2%-Zeitdehngrenze des Aluminiumgussteils 20 nahezu um 50% verringert. Zwar reduziert sich oberhalb von 100°C auch die 0,2%-Zeitdehngrenze der Umhüllung 30, liegt aber selbst bei 150°C noch immer oberhalb der 0,2%-Zeitdehngrenze des Aluminiumgussteils bei Raumtemperatur.

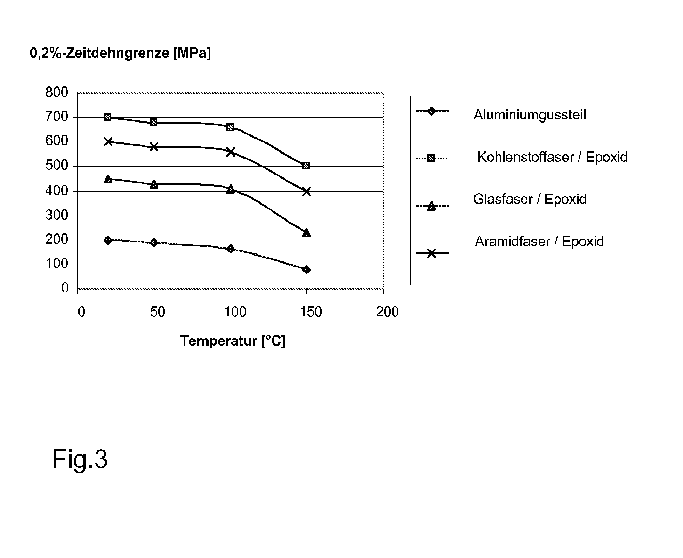

Dies ist aus Fig.3 zu erkennen. Ersichtlich ist die 0,2%-Zeitdehngrenze der Umhüllung 30 für einen Werkstoff auf der Basis Glasfaser-Epoxid bei einer Temperatur von 150°C etwas höher als beim Gussteil 20 bei Raumtemperatur. Bei der Verwendung eines Werkstoffs auf der Basis Aramidfaser-Epoxid resp. Kohlenstoffaser-Epoxid beträgt die 0,2%-Zeitdehngrenze der Umhüllung 30 bei 150°C sogar mehr als das zweifache der 0,2%-Zeitdehngrenze des Aluminiumgussteils 20 bei Raumtemperatur. Daher kann mit einer solchen Umhüllung einer Ausbeulung und Rissbildung des Aluminiumgussteils 20 insbesondere an ausbeulungs- und rissgefährdeten Abschnitten des Gussteils 20 entgegengewirkt werden. Da beim Betrieb der gekapselten gasisolierten Schaltanlage mit einem hohen Nennstrom das Modulgehäuse 10 infolge von Stromverlusten im Aluminiumgussteil 20 und der Wirkung elektromagnetischer Felder stark erwärmt wird, wirkt sich die durch diese Erwärmung hervorgerufene Festigkeitsreduktion des Aluminiumgussteils nicht auf die Berstfestigkeit des Modulgehäuses 10 aus. Das Modulgehäuse 10 kann daher auch bei hohen Gehäusetemperaturen mit einem Betriebsdruck belastet werden, der bei dem als Aluminiumgussteil ausgeführten Modulgehäuse nach dem Stand der Technik nicht mehr zulässig wäre.

Wie Fig.3 zu entnehmen ist, bestimmt die 0,2%-Zeitdehngrenze des in der Umhüllung 30 eingesetzten faserverstärkten Kunststoffs die erforderliche Wandstärke der Umhüllung 30. Ist das Modulgehäuse 10 für Betriebstemperaturen bis 150°C auszulegen, so reicht im allgemeinen eine Wandstärke der Umhüllung aus, die bei der Verwendung des Systems Glasfaser-Epoxid in etwa der Wandstärke des Gussteils 10 entspricht und bei der Verwendung der Systeme Aramidfaser-Epoxid resp. Kohlenstoffaser-Epoxid in etwa der halben Wandstärke des Gussteils 10 entspricht.

Ersichtlich sind die Fasern 31 von einem ersten Abschnitt 23 des Rohrs 20 über eine von einem zweiten Abschnitt 24 des Rohrs und dem Rohrstutzen 22 gebildete erste Krümmung 25 der Rohrverzweigung, den Rohrstutzen 22 und eine vom ersten Rohrabschnitt 23 und dem Rohrstutzen 22 gebildete zweite Krümmung 26 der Rohrverzweigung zum zweiten Rohrabschnitt 24 geführt. Dadurch und da die Fasern mit Vorteil in Form eines Bandes, etwa als Roving oder als Gewebestreifen, auf das Aluminiumgussteil 20 aufgebracht sind, zeichnet sich die Umhüllung 30 durch eine besonders hohe Stützkraft aus.

In analoger Weise sind die Fasern 31 auch bei der als Kreuzstück ausgebildeten Rohrverzweigung des Gehäuses des Moduls CE₂ aufgebracht, bei der sich zwei Rohre gleicher Bemessung unter einem Winkel von 90° kreuzen.

Aus Fig.2 ist ersichtlich, dass ein an und für sich mit faserverstärktem Kunststoff bewickelbarer Abschnitt 27 des Aluminiumgussteils 20 freiliegt. Dieser Abschnitt wirkt als Kühlelement, d.h. er nimmt die beim Betreiben der Schaltanlage im Modulgehäuse 10 vorhandene Wärme auf und führt sie nach aussen ab. Eine unzulässig hohe Erwärmung des Modulgehäuses auch beim Führen eines hohen Nennstroms wird so vermieden. Die Kühlwirkung kann zusätzlich verbessert werden, wenn an den freiliegenden Abschnitt 27 gestrichelt dargestellte Kühlrippen 28 oder ein vergleichbar wirkender Kühlkörper angeformt ist.

Das Aluminiumgussteil 20 des Modulgehäuses enthält ferner ein Verbindungsstück einer thermisch leitenden Verbindung zu einem zusätzlichen Kühlelement. Dieses Verbindungsstück ist als Verbindungsflansch 28 ausgebildet und ist mit einem als Kühlelement DK wirkenden Dehnungskompensator (Fig.1) der Schaltanlage thermisch leitend verbunden. Solch ein Dehnungskompensator ist aus druckfestem Federstahl gefertigt und weist Faltenbalgstruktur auf. In einer gasisolierten Schaltanlage kann der Dehnungskompensator zwischen einzelnen Abschnitten der Sammelschiene BB und in langen Stromleiterverbindungen wie auch an Transformator- und Kabelabgängen CO eingebaut werden. Durch axiale Verschiebbarkeit des Faltenbalgs ermöglich er den Ausbau von Anlageteilen, ohne benachbarte Abschnitte zu demontieren. Wegen der Rippenstruktur des Faltenbalgs ermöglicht er einen besonders hohen Wirkungsgrad als Kühlelement.

Durch den Einbau von Wärmerohren W an freiliegenden Teilen des Aluminiumgusskörpers 20, also am Abschnitt 27, am Verbindungsflansch 29 oder an Verbindungsflanschen 29', 29" zu den benachbarten Modulen ES und VT kann das Modulgehäuses M zusätzlich gekühlt werden.

### BEZUGSZEICHENLISTE

- CB, BB, DS, ES, CT, VT , CO, CE₁, CE₂: Module
- A: Achse
- W: Wärmerohr
- DK: Kühlelement
- 10: Modulgehäuse
- 20: Aluminiumgussteil
- 21: Rohr
- 22: Rohrstutzen
- 23, 24: Rohrabschnitte
- 25, 26: Krümmungen
- 27: Abschnitt des Rohrstutzens
- 28: Kühlrippen
- 29, 29', 29": Verbindungsflansche
- 30: Umhüllung
- 31: Fasern

## Patentansprüche

1. Gehäuse (10) für ein mit Isoliergas unter Druck gefülltes Modul (CB, BB, DS, ES, CT, VT , CO, CE₁, CE₂) einer gasisolierten gekapselten Schaltanlage mit einem als Aluminiumgussteil (20) ausgeführten Metallgehäuse, das beim Betreiben der Schaltanlage dem Druck des Isoliergases ausgesetzt ist, **dadurch gekennzeichnet, dass** auf einem ausbeulungs- oder rissgefährdeten Abschnitt des Aluminiumgussteils (20) eine Umhüllung (30) aus einem faserverstärkten Kunststoff aufgebracht ist, deren Fasern (31) mit Vorspannung um den Abschnitt geführt sind.

2. Modulgehäuse nach Anspruch 1, **dadurch gekennzeichnet, dass** die Fasern (31) in Form eines Bands um den ausbeulungs- oder rissgefährdeten Abschnitt des Aluminiumgussteils (20) gewickelt sind.

3. Modulgehäuse nach einem der Ansprüche 1 oder 2, **dadurch gekennzeichnet, dass** das Aluminiumgussteil (20) ein Kühlelement enthält.

4. Modulgehäuse nach Anspruch 3, **dadurch gekennzeichnet, dass** das Kühlelement von einem freiliegenden Abschnitt (27) des Aluminiumgussteils (20) gebildet ist.

5. Modulgehäuse nach einem der Ansprüche 1 bis 4, **dadurch gekennzeichnet, dass** das Aluminiumgussteil (20) ein Verbindungsstück einer thermisch leitenden Verbindung zu einem zusätzlichen Kühlelement (DK, W) enthält.

6. Modulgehäuse nach Anspruch 5, **dadurch gekennzeichnet, dass** das Verbindungsstück als Verbindungsflansch (29) des Aluminiumgussteils (20) ausgebildet ist.

7. Modulgehäuse nach einem der Ansprüche 1 bis 6, **dadurch gekennzeichnet, dass** das Aluminiumgussteil (20) als Rohrverzweigung ausgebildet ist und ein Rohr (21) sowie mindestens einen am Rohr (21) angesetzten Rohrstutzen (22) aufweist, und dass der faserverstärkte Kunststoff am Ansatz des Rohrstutzens (22) an das Rohr (21) auf das Aluminiumgussteil (20) aufgebracht ist.

8. Modulgehäuse nach Anspruch 7, **dadurch gekennzeichnet, dass** die Fasern (31) von einem ersten Abschnitt (23) des Rohrs (21) über eine von einem zweiten Abschnitt (24) des Rohrs (21) und dem Rohrstutzen (22) gebildete erste Krümmung (25) der Rohrverzweigung, den Rohrstutzen (22) und eine vom ersten Rohrabschnitt (23) und dem Rohrstutzen (22) gebildete zweite Krümmung (26) der Rohrverzweigung zum zweiten Rohrabschnitt (24) geführt sind.

9. Modulgehäuse nach einem der Ansprüche 7 oder 8, **dadurch gekennzeichnet, dass** die Rohrverzweigung als T-Stück ausgebildet ist.

10. Modulgehäuse nach einem der Ansprüche 7 bis 9, **dadurch gekennzeichnet, dass** die Rohrverzweigung als Kreuzstück ausgebildet ist.

11. Modul (CB, BB, DS, ES, CT, VT , CO, CE₁, CE₂) mit einem Modulgehäuse (10) nach einem der Ansprüche 1 bis 10.
